# EUROPEAN PATENT APPLICATION

(11) **EP 4 012 878 A1**
(43) Date of publication of application: **15.06.2022**
(21) Application number: 20212547.2
(22) Date of filing: 08.12.2020
(51) Int. Cl.: H02J 7/00

(54) **METHOD AND SYSTEM FOR BALANCING CHARGE OF BATTERY CELLS**

(71) Applicant: Vito, 2400 Mol (BE)
(72) Inventor: COENEN, Peter, 2400 Mol (BE); FEKRIASL, Sajjad, 2400 Mol (BE)
(74) Representative: Nederlandsch Octrooibureau

(57) **Abstract**

A method for balancing charge over a plurality of cells connected in series in a battery, the method comprising: during the charging/discharging of the battery: determining when a characteristic parameter of a cell of the plurality of cells reaches a characteristic value associated with a first state of charge, counting the number of Coulombs exchanged with the cell by means of a respective Coulomb counter of a plurality of Coulomb counters connected to the plurality of cells, and repeating said acts until a predetermined charging or discharging criteria is fulfilled; determining a charge imbalance based on the counted number of Coulombs for each of the plurality of cells; and transferring charge to or away from at least one cell of the plurality of cells based on the determined charge imbalance to reduce the charge imbalance. A system for balancing charge over the plurality of battery cells.

## Description

### Field of the Invention

The present invention relates to a method for balancing charge over a plurality of cells connected in series in a battery while charging or discharging the battery. The present invention further relates to a system for balancing charge over a plurality of cells connected in series in a battery while charging or discharging the battery.

### Background

Batteries are a preferred choice for energy storage in applications that can't be powered from the electric grid yet require electricity to run. To achieve a battery voltage compatible with applications in general, batteries are typically configured or constructed to include cells connected in series (Series Grouping). It is known that specific applications require different numbers of cells, ranging from 2 to 200 cells connected in series or series-parallel, for example, consumer electronics (e.g., mobile phone, laptop, drones, vacuum cleaners, etc.) can require between 2-12 cells, power tools (e.g., for construction, gardening, housework, etc.) can require between 6-24 cells, battery backup systems (e.g., uninterruptible power source) can require 6-48 cells, and electric vehicles (e.g., plug-in electric vehicle, an all-electric or battery electric vehicle, a plug-in hybrid electric vehicle, a new energy vehicle, etc.) can require between 48 and 200 cells. Cells grouped in series are all submitted to an identical current, and consequently to identical changes in charge. Therefore, several problems arise when the cells are not identical or the charge in the cells starts to deviate from each other. One problem is the limitation of the battery performance, for example, while discharging, one cell will be empty while the others are not, and while charging, another cell will be full while the others are not. To avoid this, the cells must be kept in balance. As batteries are frequently charged to a full state of charge (100% SoC) charge balancing refers to a situation where, while charging, all cells are full at the same time. Batteries are oftentimes discharged to an empty state of charge (0% SoC) or full state/depth of discharge (0% SoC or 100% DoD).

To evaluate whether a cell is full or empty, a cell voltage measurement is typically used. As cells are charged, their voltage increases, and as cell are discharged their voltage decreases. As is already known, balancing has been performed by discharging the cell with the highest voltage or by charging the cell with the lowest voltage. Document US8098048B2 describes a battery charger containing circuitry including integrated cell balancing and automatic cell configuration determination. The charger automatically adapts output current to different battery configurations. The charger also ensures that all the cells within a battery configuration are at roughly the same voltage.

In certain batteries, such as Lithium-ion (e.g., Lithium iron phosphate), Sodium-ion, Nickel-based, Aluminium-ion, etc. batteries, the voltage is not an accurate indication of SoC/DoD. In such cases, the cell voltage rises only when the cell is already nearly full, and the cell voltage decreases only when the cell is already nearly empty. However, in all other cases, the voltage cannot be used to determine the SoC/DoD of the battery or cells thereof. This can be visualized as a flat part of an electromotive force (EMF) curve (i.e., charge and/or discharge curves). Hence balancing can only be started when at least one cell is almost full or empty, preferably when most cells are almost full or empty. Furthermore, in such batteries, the cell voltage exhibits a hysteresis behaviour, where the voltage at the same SoC/DoD while charging/discharging is higher (e.g., around 50 mV for LFP) than while discharging, even with very small currents. This hysteresis is difficult to take into account as it includes a memory effect due to the underlying chemistry of the cell.

An alternative criterion to cell-voltage based balancing is SoC balancing. However due to the same flatness in the EMF curve and the hysteresis, as described above, the SoC is not observable or cannot be accurately determined for most SoC values.

Balancing charge in a battery implies having it connected to a charger while balancing, and starting the balancing when the battery is nearly full. This is referred to as top balancing. Balancing discharge in a battery implies having it connected to a discharger while balancing, and starting the balancing when the battery is nearly empty. This is referred to as bottom balancing. Top and bottom balancing can't be performed while the battery is in use as using the load current will influence the cell voltages, and, thus, affecting the balancing decisions. The balancing is typically performed after the bulk charging/discharging for the reason mentioned above. Hence the availability of the battery is reduced in order to balance it.

In efforts to limit balancing time, balancing circuits are designed to be quite powerful, but, at the same time, expensive while generating unwanted heat. It has been found that despite these efforts, there is still a need to a safer and a more reliable and efficient balancing of charge/discharge in batteries, for example, less generation of unwanted heat. Moreover, there is a need to provide an improved balancing of charge/discharge that allows use of the battery while charging, idle or discharging.

### Object of the Invention

An object of the invention is to provide a method and a system that overcome the above mentioned disadvantages.

Another object of the invention may be to provide an improved cell balancing in a battery.

Another object of the invention may be to provide a more effective balancing of charge/discharge over a plurality of cells in a battery.

Another object of the invention may be to provide a system that is more cost-efficient and compact.

Another object of the invention may be to provide a safer, more reliable and efficient functioning of a battery.

### Summary of the Invention

This object is achieved by a method for balancing charge over a plurality of cells connected in series in a battery, the method comprising the steps of: while the charging or discharging of the battery: i) determining when a characteristic parameter (e.g., voltage or current) of a cell of the plurality of cells reaches a first characteristic value (e.g. a non-flat or exponential part of a voltage-SoC curve or EMF-SoC curve) associated with a first state of charge, for e.g. near full SoC/DoD, preferably 98 % SoC/DoD or around 100% SoC/DoD; ii) upon determining that the characteristic parameter of the cell reaches the first state of charge, counting the number of Coulombs exchanged with the cell by means of a respective Coulomb counter of a plurality of Coulomb counters connected to the plurality of cells, and iii) repeating acts i)-ii), described above, until a predetermined charging or discharging criteria is fulfilled. The Coulomb counting may be performed in steps of one or more milliseconds, centiseconds, deciseconds, seconds, etc.

It must be noted that the term "State of Charge (SoC)" refers to the level of charge of an electric battery relative to its capacity, and also refers to an inverse of the term "Depth of Discharge (DoD)". Both terms will be used interchangeably herein.

Furthermore, the term "charge imbalance" refers to when differences appear among the SOC of the individual cells of a battery, due to manufacturing tolerances, uneven temperature distribution, differences in ageing etc., which also refers to the term "discharge imbalance". Both terms will be used interchangeably herein.

The method further comprises the steps of determining a charge imbalance based on the counted number of Coulombs for each of the plurality of cells and transferring charge to or away from at least one first cell of the plurality of cells based on the determined charge imbalance to reduce the charge imbalance. The steps of determining a charge imbalance and transferring charge may be repeated one or more times until a desired balancing of charge over the plurality of cells is obtained. For example, until values provided by the plurality of Coulomb counters are smaller than a predetermined Coulomb threshold, such as less than or equal to 30%, less than or equal to 25%, less than or equal to 20%, less than or equal to 15%, less than or equal to 10%, etc. of the largest value provided by any of the plurality of Coulomb counters in any previous repetition or any previous time or iteration where said steps of determining and transferring were performed.

The method may further comprise determining when the predetermined charging or discharging criteria is fulfilled; and upon determining that the predetermined criteria is fulfilled, stop charging or discharging, wherein the step determining the charge imbalance and the step of transferring charge are performed after the predetermined charging or discharging criteria is fulfilled.

The step determining the charge imbalance and the step of transferring charge may be performed before and/or after the predetermined charging or discharging criteria is fulfilled

The use of Coulomb counters provides improved accuracy in the determining of charge or discharge imbalance, and, thus, provides effective pre-balancing and/or balancing of charge or discharge, in comparison to cell-voltage or SoC based balancing methods. The Coulomb counting may also stop upon determining that the predetermined charging or discharging criteria is fulfilled. Thus, the method provides more efficient determining of charge or discharge imbalance.

Furthermore, while charging or discharging pre-balancing can be performed, where the characteristic parameter (e.g. cell voltage) is not used in any way to evaluate the charge imbalance and to make a pre-balancing decision. Furthermore, by stopping the charging or discharging, overvoltages are avoided. After the charging or discharging is stopped balancing can be performed, where the characteristic parameter (e.g. cell voltage) is not used in any way to evaluate the charge imbalance and to make a pre-balancing decision. Hence, the battery can be used for any application during this time without any influence on the pre-balancing work. Furthermore, the charging process may take no longer than charging without balancing. Thus, the Coulomb counters allow the use of the battery while charging, idle or discharging.

If the charger can't supply a low enough current to avoid any cell from reaching its maximum allowed voltage, the charging may be interrupted. In this case the Coulomb counters would not hold an accurate estimate of the imbalance. Nevertheless, the balancing would be executed as planned, however a second iteration may be needed to achieve complete balance. During the second iteration the balance between cells may be betterthan during the first iteration. Thus, the likelihood of premature interruption of charging current is reduced.

The first state of charge may be a near full SoC, preferably the first state of charge or discharge is around 98 %.

The characteristic parameter may be a voltage and the step of determining when the act of determining when the cell of the plurality of cells reaches the first characteristic parameter value associated with the first state of charge comprises: measuring the voltage (e.g. open circuit voltage OCV) across each of the plurality of cells; and determining when any one of the measured voltages passes the first characteristic voltage value.

Advantageously, counting a number of Coulombs after determining that a cell reaches near full state of charge (SoC) or discharge (DoD), preferably based on a measured cell voltage, reduces Coulombic losses, and, thus, provides effective delivery of total energy. Furthermore, the Coulomb counters would provide values relative to an initial value upon determining that the cell reaches a near full SoC or DoD, and, thus, allowing for more efficient Coulomb counting.

During discharging of the battery, agitation caused by a highly dynamic current can distort the determination of the SoC, DoD or voltage measurement. Therefore, to reliably determine the SoC or DoD, and to obtain accurate measurements, it is recommended to determine the SoC or DoD and/or to measure the voltage when the battery is at rest or is being discharged at a less dynamic current.

The predetermined charging or discharging criteria may be fulfilled when the characteristic parameter of any cell of the plurality of cells reaches a second characteristic value associated with a second state of charge. The second state of charge may be near the full state of charge, preferably the second state of charge may be around 100 %.

The predetermined charging or discharging criteria may be based on at least one of the group consisting of: a predetermined current threshold and a predetermined voltage threshold. The predetermined current threshold may be around 5% or less, around 4% or less, around 3% or less of a maximum allowed current. The predetermined charging or discharging criteria may require measuring of a current flowing through the battery or cells therein. The predetermined voltage threshold may be around 85% or more, around 90% or more or around 95% or more of a maximum/minimum voltage at the full state of charge. Thus, The predetermined charging or discharging criteria may require measuring of the voltage across each cell.

The determining of charge or discharge imbalance may comprise determining a balancing time, a balancing current and a balancing direction. Therefore, the transferring of charge to or away from at one cell can be automatically stopped based on the determined balancing time. Furthermore, the amount of needed or excess charge by each of the at least one cell can be used to more effectively transfer charge. As a result, the balancing of charge/discharge by transferring of charge can be done more effectively.

The determining when a characteristic parameter of a cell of the plurality of cells reaches the first characteristic value associated with a first state of charge may be based on a temperature of the cell the plurality of cells. It is known that SoC/DoD or voltage are significantly affected by the battery temperature or the temperature of a cell in the battery. Therefore, by taking into consideration the temperature of the battery or the cells therein, the characteristic parameter of the cell can be more accurately determined.

The transferring of charge may comprise providing an electric current to or away from an electric current generator and/or to or away from at least one second cell of the plurality of cells. Therefore, a decision-making process to provide an optimal transfer and allocation of charge based on the needed or excess charge which is supplied to or provided by the cells, for example, using transport theory to determine an optimal transfer plan of charge. Thus, a reduced number of transfers of balancing current can be performed between/among the cells or between/among the cells and the electric current generator, while reducing the balancing time required. As a result, the balancing of charge or discharge can be done more efficiently.

The transferring of charge may be performed until the plurality of Coulomb counters hold a same number of Coulombs. Therefore, it would be ensured that the charge/discharge over the plurality of cells is balanced.

This object is also achieved by a system for balancing charge over a plurality of cells connected in series in a battery, the system comprising: a plurality of balancing units each connected to a respective cell of the plurality of cells; and an electric current generator for providing an electric current to or away from the plurality of balancing units for balancing the charge/discharge over the plurality of cells, wherein each of the plurality of balancing units comprises at least one switching means configured to connect or disconnect an input terminal to or from an output terminal of the respective balancing unit, wherein each of the plurality of balancing units comprises a microcontroller, the microcontroller being configured to control the at least one switching means and perform any of the above-disclosed method steps.

The battery may be an Alkali-ion battery or Alkali metal-ion battery, preferably, a Sodium-ion (Na-ion) battery, a Potassium-ion (K-ion) battery, a Lithium-ion (Li-ion) battery, such as Lithium Polymer (LiPo), Lithium Iron Phosphate (LiFePO₄ or LFP), Lithium Manganese Oxide (LiMn₂O₄, Li₂MnO₃, or LMO), Lithium Nickel Manganese Cobalt Oxide (LiNiMnCoO₂ or NMC), Lithium Titanate (LTO), Lithium-Sulfur (Li-S), etc., a Nickel-based battery, such as Nickel-Iron (NiFe), Nickel-Metal Hydride (NiMH), Nickel-Cadmium (NiCd), Nickel-Zinc (Ni-Zn), etc., Aluminium-ion, etc. In such batteries, using only cell-voltage based balancing or SoC/DoD balancing may not be effective. Other types of batteries may be Lead acid (PbAc), etc.

### Brief description of the drawings

The invention will be explained in more detail below with reference to drawings in which illustrative embodiments thereof are shown. They are intended exclusively for illustrative purposes and not to restrict the inventive concept, which is defined by the appended claims.
Fig. 1A shows a schematic flow chart for balancing charge over a plurality of cells according to the present invention;
Fig. 1B shows a schematic flow chart for balancing discharge over a plurality of cells according to the present invention;
Fig. 2 shows a graphical drawing of EMF curves as a function of SoC at different temperatures;
Fig. 3 shows graphical drawings of an EMF curve of each cell and their respective Coulomb count curve as function of time while charging;
Fig. 4A shows a graphical drawing of an EMF curve of cells as a function of SoC;
Fig. 4B shows graphical drawings of an EMF curve of each cell and their respective Coulomb count curve as function of time;
Fig. 4C shows graphical drawings of an EMF curve of each cell of Fig. 4B and their respective Coulomb count curve as function of time after a first iteration of charge balancing;
Fig. 5A shows graphical drawings of an EMF curve of each cell and their respective Coulomb count curve as function of time;
Fig. 5B shows graphical drawings of an EMF curve of each cell of Fig. 5A and their respective Coulomb count curve as function of time after five iterations of charge balancing;
Fig. 6 shows a schematic drawing of a system comprising an AC signal generator and a plurality of balancing units;
Fig. 7 shows a schematic drawing of a balancing unit of Fig. 6;
Fig. 8 shows a schematic drawing of a system comprising an DC signal generator and a plurality of balancing units; and
Fig. 9 shows a schematic drawing of a balancing unit of Fig. 8.

### Detailed description of the drawings

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B, and further the claim should be interpreted as including equivalents of those components.

Different aspects of the present disclosure will be described more fully hereinafter with reference to the enclosed drawings. The embodiments disclosed herein can, however, be realized in many different forms and should not be construed as being limited to the aspects set forth herein.

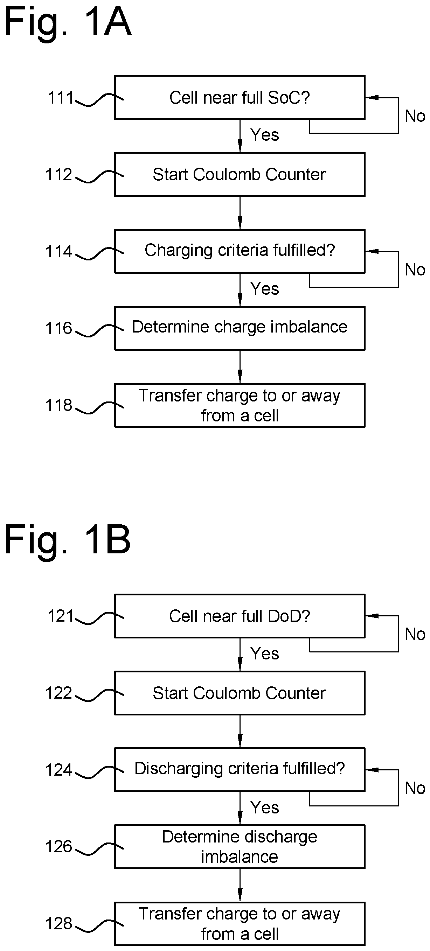

Embodiments of a method according to the present invention will be described with reference to Figs. 1A-5B. Fig. 1A shows a schematic flow chart for balancing charge over a plurality of cells according to the present invention.

The method for balancing charge over a plurality of cells connected in series in a battery comprises charging the battery, and during charging of the battery, determining 111 when a characteristic parameter of a cell of the plurality of cells reaches a first characteristic value associated with a first SoC, for example, determining whether a cell of the plurality of cells reaches a near full SoC (e.g. around 95 %, around 96 %, around 97% or around 98 %). The determining 111 may comprise measuring the voltage across each of the plurality of cells, and determining when any one of the measured voltages passes (e.g., is greater than or equal to) the first characteristic voltage value, for example, the first characteristic voltage value may be a value where the EMF-SoC or voltage-SoC curve is exponential or not flat.

The predetermined charging criteria may be fulfilled when the characteristic parameter of any cell of the plurality of cells reaches a second characteristic value associated with a second state of charge. For example, determining whether a cell of the plurality of cells reaches a near full SoC, preferably around 100 %.

Upon determining that the characteristic parameter of the cell reaches the first state of charge, for example, upon determining that the cell reaches a near full SoC, start counting 112 a number of Coulombs by means of a plurality Coulomb counters. The number of Coulombs is exchanged with, supplied to or stored in the cell to which a respective Coulomb counter is connected. The number of Coulombs are counted until a predetermined charging criteria is fulfilled. In the example of Fig. 1A, when the predetermined charging criteria is determined 114 to be fulfilled, the charging is stopped, and steps 116 and 118 are performed. This is referred to as balancing. In the present invention, when the predetermined charging criteria is determined 114 to be fulfilled, the charging is not necessarily stopped, and steps 116 and 118 are performed. This is referred to as pre-balancing.

In the case that the predetermined criteria is determined to not be fulfilled, continue checking when said criteria is fulfilled. Furthermore, in the case that it is determined that the characteristic parameter of a cell of the plurality of cells does not reach a first characteristic value associated with a first SoC, for example, the cell does not reach a near full SoC, continue on checking when said SoC is reached. In the present invention, the acts of determining 111 and counting 112 are repeated for other cells in the plurality of cells.

The plurality of cells may be an Alkali-ion or Alkali metal-ion battery wherein a voltage across the cell indicates an approximate SoC as described above, such as Lithium-ion (LI), Nickel-based, Aluminium-ion, Sodium-ion, Potassium-ion, etc. Determining 111 when a cell of the plurality of cells reaches a near full SoC may comprise measuring a voltage across each of the plurality of cells, for example by means of a voltmeter or any other means known in the art.

The determining 114 when a predetermined charging criteria is fulfilled may comprise measuring a charging current provided for charging the battery. This may be useful to determine whether the current flowing through or supplied to the cells is equal to or less than a predetermined current threshold, for example, around 5% or less, around 4% or less, around 3% or less of the a maximum allowed current. Thus, one predetermined charging criteria may be the measured charging current being equal to or less than a predetermined current threshold.

The determining 114 when a predetermined charging criteria is fulfilled may comprise measuring the voltage across each cell. This may be useful to determine whether the voltage across each cell is greater than or equal to a predetermined voltage threshold, for example, around 85% or more, around 90% or more or around 95% or more of a maximum voltage at the full SoC. Thus, one predetermined charging criteria may be the measured voltage being greater than or equal to a predetermined voltage threshold (e.g. a maximum allowed voltage) and/or the measured voltage across each of the plurality of cells having changed.

The method further comprises determining 116 charge imbalance based on the counted number of Coulombs which is exchanged by, supplied to or stored in each of the plurality of cells, upon determining that the predetermined criteria is fulfilled. The charge imbalance may comprise a balancing time, a balancing current and a balancing direction, which may be determined when determining the charge imbalance. The balancing time refers to the time needed to balance a respective cell with the balancing current, which refers to the amount of current needed to balance said respective cell for said balancing time, in the balancing direction, which refers to the direction of balancing current needed to balance said respective cell for said balancing time.

Once the charge imbalance is determined, the charge over the plurality of cells is balanced by transferring 118 charge to or away from the cell or at least one first cell of the plurality of cells based on said charge imbalance. For example, if after stopping the charging, a cell has a very high charge, a specific amount of charge (e.g. a determined current) is transferred away from said cell to reduce the charge imbalance. Thus, the transferring 118 of charge is performed to reduce the charge imbalance. Once, a preferred amount of charge imbalance is reduced, the balancing may be stopped. In embodiments, the transferring 118 of charge may be performed to reduce the charge imbalance such that the number of Coulombs in the plurality of Coulomb counters is equal. The transferring 118 of charge may be performed until the plurality of Coulomb counters hold a same number of Coulombs.

In embodiments, the transferring 118 of charge may comprise providing an electric current to or away from an electric current generator. For example, if after stopping the charging, a cell has a very high charge, a specific amount of electric current is transferred to an electric current generator and away from said cell to reduce the charge imbalance. Additionally or alternatively, the transferring 118 of charge may comprise providing an electric current to or away from at least one other or second cell of the plurality of cells. For example, in the cell with a very high charge, the specific amount of electric current is transferred from said cell to another or a second cell, which has a very low charge.

In embodiments, the method may comprise, during charging of the battery, determining a pre-balancing charge imbalance based on the counted number of Coulombs which is exchanged with, supplied to or stored in the cell, which is determined to reach a near full SoC. Moreover, the method may further comprise, during charging of the battery, pre-balancing said cell, by transferring charge to or away from the cell of the plurality of cells based on the determined pre-balancing charge imbalance to reduce the charge imbalance. Said transferring of charge for pre-balancing may be similar to the transferring 118 of charge described above with reference to balancing of the cells.

The determining of the pre-balancing charge imbalance may comprise determining a pre-balancing time, a pre-balancing current and a pre-balancing direction. The pre-balancing time refers to the time needed to balance a respective cell in during charging with the pre-balancing current, which refers to the amount of current needed to balance said respective cell for said pre-balancing time during charging, in the pre-balancing direction, which refers to the direction of pre-balancing current needed to balance said respective cell for said pre-balancing time during charging.

Fig. 1B shows a schematic flow chart for balancing discharge over a plurality of cells according to the present invention.

The method for balancing discharge over a plurality of cells connected in series in a battery comprises discharging the battery, and during discharging of the battery, determining 121 when a characteristic parameter of a cell of the plurality of cells reaches a first characteristic value associated with a first DoD (i.e., 1 - SoC), for example, determining whether a cell of the plurality of cells reaches a near full DoD (e.g. around 95 %, around 96 %, around 97% or around 98 %). The determining 121 may comprise measuring the voltage across each of the plurality of cells, and determining when any one of the measured voltages passes (e.g., is less than or equal to) the first characteristic voltage value, for example, the first characteristic voltage value may be a value where the EMF-DoD or voltage-DoD curve is exponential or not flat.

The predetermined discharging criteria may be fulfilled when the characteristic parameter of any cell of the plurality of cells reaches a second characteristic value associated with a second state of charge. For example, determining whether a cell of the plurality of cells reaches a near full DoD, preferably around 100 %.

Upon determining that the characteristic parameter of the cell reaches the first DoD, for example, upon determining that the cell reaches a near full DoD, start counting 122 a number of Coulombs by means of a plurality Coulomb counters. The number of Coulombs is exchanged with, provided by or stored in the cell to which a respective Coulomb counter is connected. The number of Coulombs are counted until a predetermined discharging criteria is fulfilled. In the example of Fig. 1B, when the predetermined discharging criteria is determined 124 to be fulfilled, the charging is stopped, and steps 126 and 128 are performed. In the present invention, when the predetermined charging criteria is determined 124 to be fulfilled, the discharging is not necessarily stopped, and steps 126 and 128 are performed.

In the case that the predetermined discharging criteria is determined to not be fulfilled, continue checking when said criteria is fulfilled. Furthermore, in the case that it is determined that the characteristic parameter of a cell of the plurality of cells does not reach a first characteristic value associated with a first DoD, for example, the cell does not reach a near full DoD, continue on checking when said near full DoD is reached. In the present invention, the acts of determining 121 and counting 122 are repeated for other cells in the plurality of cells.

The plurality of cells may be an Alkali-ion or Alkali metal-ion battery wherein a voltage across the cell indicates an approximate DoD as described above, such as Lithium-ion (LI), Nickel-based, Aluminium-ion, Sodium-ion, Potassium-ion, etc. Determining 121 when a cell of the plurality of cells reaches a near full DoD may comprise measuring a voltage across each of the plurality of cells, for example by means of a voltmeter or any other means known in the art.

The determining 124 when a predetermined charging criteria is fulfilled may comprise measuring a discharging current provided for discharging the battery. This may be useful to determine whether the current flowing through or supplied from the cells is equal to or less than a predetermined current threshold, for example, around 5% or less, around 4% or less, around 3% or less of the a maximum allowed current. Thus, one predetermined charging criteria may be the measured discharging current being equal to or less than a predetermined current threshold.

The determining 124 when a predetermined discharging criteria is fulfilled may comprise measuring the voltage across each cell. This may be useful to determine whether the voltage across each cell is greater than or equal to a predetermined voltage threshold, for example, around 85% or more, around 90% or more or around 95% or more of a maximum voltage at the full DoD. Thus, one predetermined charging criteria may be the measured voltage being less than or equal to a predetermined voltage threshold (e.g. a minimum allowed voltage) and/or the measured voltage across each of the plurality of cells having changed.

The method further comprises determining 126 charge imbalance based on the counted number of Coulombs which is exchanged by, supplied from or stored in each of the plurality of cells, upon determining that the predetermined criteria is fulfilled. The charge imbalance may comprise a balancing time, a balancing current and a balancing direction, which may be determined when determining the discharge imbalance. The balancing time refers to the time needed to balance a respective cell with the balancing current, which refers to the amount of current needed to balance said respective cell for said balancing time, in the balancing direction, which refers to the direction of balancing current needed to balance said respective cell for said balancing time.

Once the discharge imbalance is determined, the charge over the plurality of cells is balanced by transferring 128 charge to or away from the cell or at least one first cell of the plurality of cells based on said discharge imbalance. For example, if after stopping the discharging, a cell has a very low charge, a specific amount of charge (e.g. a determined current) is transferred toward said cell to reduce the discharge imbalance. Thus, the transferring 128 of charge is performed to reduce the discharge imbalance. Once, a preferred amount of charge imbalance is reduced, the balancing may be stopped. In embodiments, the transferring 128 of charge may be performed to reduce the discharge imbalance such that the number of Coulombs in the plurality of Coulomb counters is equal. The transferring 128 of charge may be performed until the plurality of Coulomb counters hold a same number of Coulombs.

In embodiments, the transferring 128 of charge may comprise providing an electric current to or away from an electric current generator. For example, if after stopping the discharging, a cell has a very high charge, a specific amount of electric current is transferred to an electric current generator and away from said cell to reduce the discharge imbalance. Additionally or alternatively, the transferring 128 of charge may comprise providing an electric current to or away from at least one other or second cell of the plurality of cells. For example, in the cell with a very high charge, the specific amount of electric current is transferred from said cell to another or a second cell, which has a very low charge.

In embodiments, the method may further comprise, during discharging of the battery, determining a pre-balancing discharge imbalance based on the counted number of Coulombs which is provided by or stored in the cell, which is determined to reach a near full DoD. Moreover, the method may further comprise, during discharging of the battery, pre-balancing said cell, by transferring charge to or away from the cell of the plurality of cells based on the determined pre-balancing discharge imbalance to reduce the discharge imbalance. Said transferring of charge for pre-balancing may be similar to the transferring 128 of charge described above with reference to balancing of the cells.

The determining of the pre-balancing discharge imbalance may comprise determining a pre-balancing time, a pre-balancing current and a pre-balancing direction. The pre-balancing time refers to the time needed to balance a respective cell in during discharging with the pre-balancing current, which refers to the amount of current needed to balance said respective cell for said pre-balancing time during discharging, in the pre-balancing direction, which refers to the direction of pre-balancing current needed to balance said respective cell for said pre-balancing time during discharging.

It should be noted that in each of the methods of balancing charge and discharge described above, i.e., transfer of charge to a cell and transfer of charge away from a cell, may be performed to reduce charge (and/or discharge) imbalance.

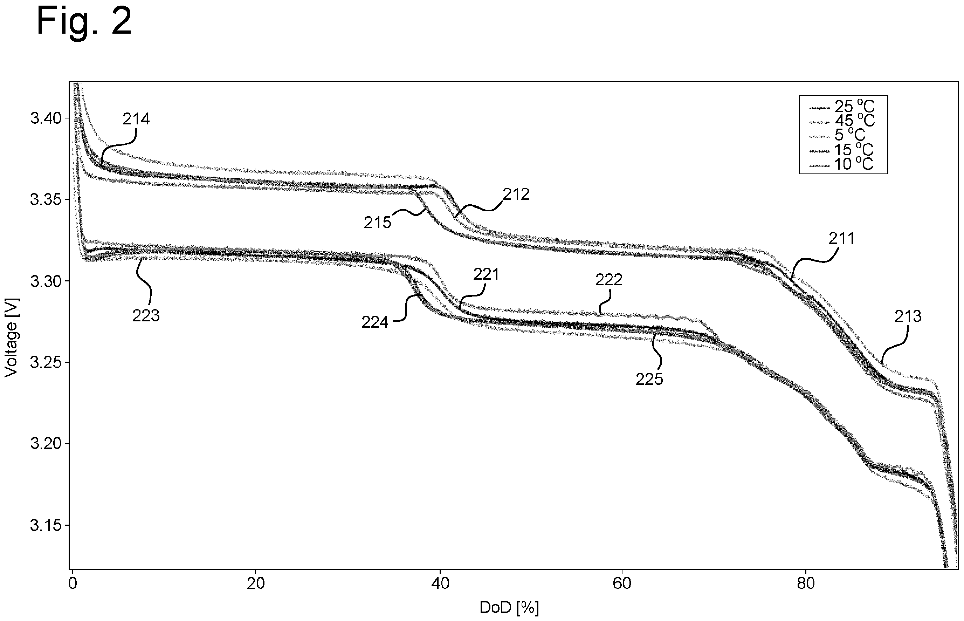

Fig. 2 shows a graphical drawing of EMF curves of a cell 411 , 412, 413, 414, while charging at C/100, as a function of DoD at different temperatures 25, 45, 5, 15, 10 degrees Celsius, respectively. Fig. 2 further shows a graphical drawing of EMF curves 421, 422, 423, 424, while discharging, as a function of DoD at different temperatures 25, 45, 5, 15, 10 degrees Celsius, respectively. In all the EMF curves shown, there is at least one part that is flat. This causes difficulties in determining the SoC and/or DoD based on the measured voltage or EMF of the cell. Furthermore, there is shown a gap between both sets of EMF curves (i.e., charging and discharging). Thus, Fig. 2 shows evidence of hysteresis for a C/100 test, which is a path-dependent voltage that does not decay to zero when the cell rests, unlike diffusion voltages. Furthermore, this hysteresis is shown to be independent of the temperature.

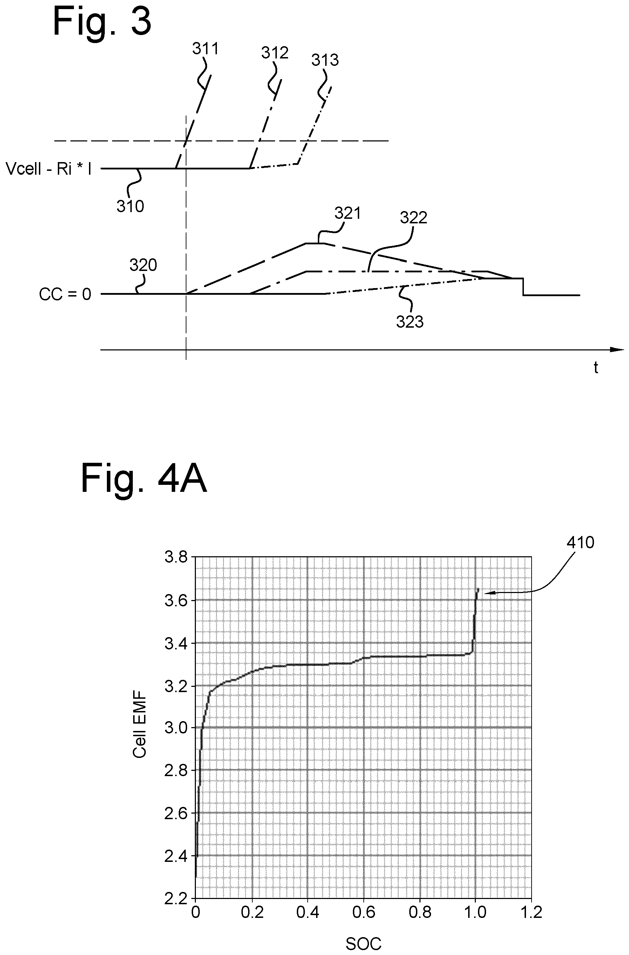

Fig. 3 shows graphical drawings of an EMF curve of each cell and their respective Coulomb count curve as function of time while charging. First, the battery is charged in a conventional way, and all the cell voltages (V_{cell}) are measured. The measured voltage is corrected with the voltage drop over the internal resistance (Rᵢ) of the cell, as follows: V_{cell} - Rᵢ ^{∗} I, wherein the voltage drop over the internal resistance is calculated by multiplying the internal resistance with the current (I) flowing through the resistance. The value of the internal resistance can be taken from a datasheet and may be considered constant for all cells or specific to each cell.

Due to the shape of the EMF curve, the voltage of the first cell with the highest charge will start rising (as shown by 311), while all other voltages remain more or less constant (as shown by 310). During this phase, the charger may be reducing the current to avoid overvoltages and the EMF curve 310 may actually descend slightly due to the internal resistance correction, particularly, the measured (uncorrected) voltage may drop due to less drop across the internal resistance as the charging current drops. After correction, the voltage (more or less the EMF if we neglect transients) may still rise as charge is still being added albeit at a slow rate.

As soon as the EMF curve 311 exceeds a first characteristic value associated with a first state of charge (dotted line), for example, the measured voltage passes the first characteristic voltage value, the Coulomb counter associated to the first cell starts counting the charge, i.e. integrating the battery charge current. This is done for all cells, for example, the second cell (see curve 312) and the third cell (see curve 313) until it is determined that a charging criteria is fulfilled, as described in embodiments above. The charging criteria may be the charging current becoming very small, the voltage of any cell reaching the maximum allowed voltage or the last cell's voltage starts rising (see curve 313). The values in the individual coulomb counters are depicted in the lower plot. The slopes are equal to the charging current. In Fig. 3, the slopes of the charging current are depicted to be constant, however they are usually decreasing as the battery fills up. At this point, i.e., when the predetermined charging criteria is fulfilled, the charging is stopped and the balancing is started.

Upon determining that the first cell voltage 311 has exceeded the first characteristic voltage value, the Coulomb counter connected to the first cell starts counting. The same applies to the other cells 312, 313.

It is assumed in this example that the transfer charge to a cell is performed with 0,1 A and the transfer of charge away from a cell is performed with 0,2 A, and that the balancing power is limited to transfer of charge to one cell and transfer of charge away from one cell. The first cell with the highest value in the individual Coulomb counter (see curve 321) is set to be balanced by transferring charge away from the first cell, and the third cell with the lowest value in its counter (see curve 323) holding zero is set to be balanced by transferring charge toward the third cell. The coulomb counters are now modified accordingly until they become equal. The Coulomb curve of the third cell 323 is increased with 0,1 C/s, and the Coulomb curve of the first cell 321 is decreased with 0,2 C/s. This can take several hours depending on the imbalance. When done, the second cells (see curve 322) is examined in the same way and balancing continues for those cells until all coulomb counters hold the same value. The second cell (see curve 322) may be examined simultaneously with the first and third cells may be examined since each cell has its dedicated balancing circuit. Then, the battery is balanced.

Note that the charge and/or discharge balancing are not limited to the above disclosed values. Moreover, the balancing power is not limited to transferring charge to one cell and transferring charge away from one cell. In the present invention, the balancing power may be provided for charge balancing a plurality of cells simultaneously, where charge is transferred to one or more cells and/or transferred away from one or more other cells.

Embodiments of the method according to the present invention will be described with reference to Figs. 4A-4C. Fig. 4A shows a graphical drawing of an EMF curve of cells as a function of SoC. In Fig. 4A, the flat part of the EMF curve during charging can be seen to be between 0.2 SoC and approximately 1 SoC. In this example, the first characteristic voltage value for the Coulomb counters to start counting is set to around 3,4 V, and the Coulomb counting starts when it is determined the cell voltage V_{cell} > 3,4 V.

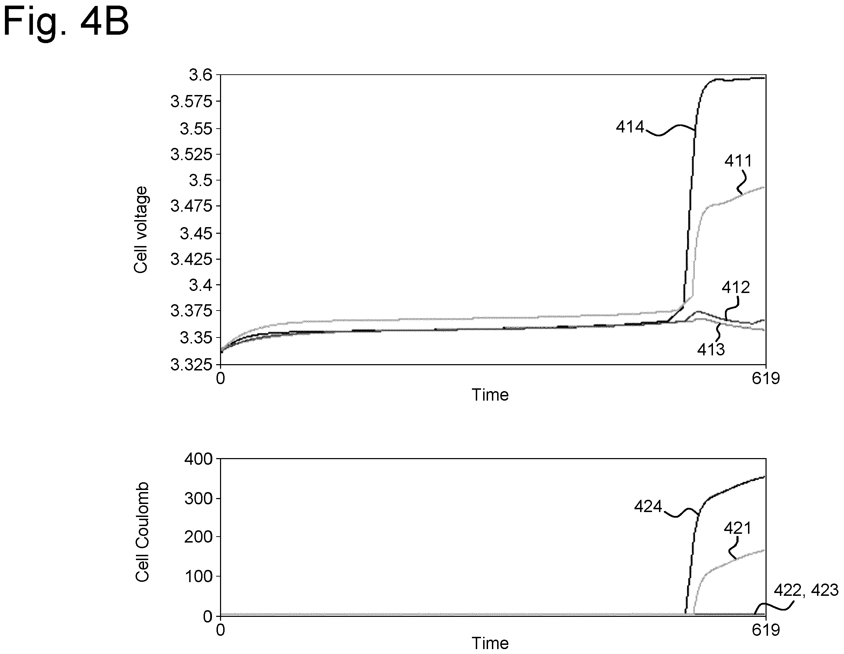

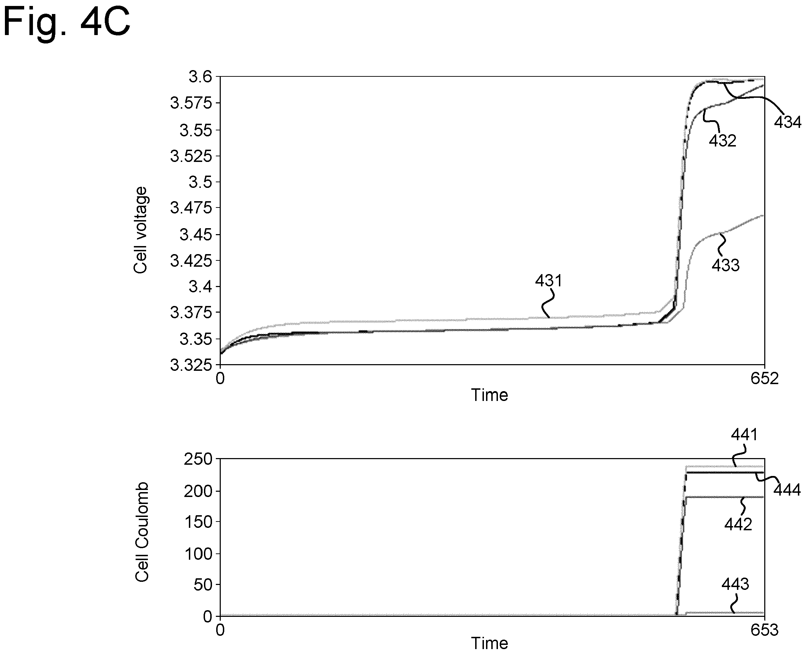

Figs. 4B and 4C show graphical drawings of an EMF curve of each cell and their respective Coulomb count curve as a function of time. In the example shown in Figs. 4A-4C, there are four cells comprised in a battery with the following cell capacities: The first cell having a Coulomb capacity of 36100 C, the second cell having a Coulomb capacity of 36300 C, the third cell having a Coulomb capacity of 36500 C, and the fourth cell having a Coulomb capacity of 35900 C.

With reference to Figs. 4A-4C, all the cells contain the same initial charge of 25000 C at the start of the charging, and the initial charging current is 20A. Fig. 4B shows a first iteration of charging and balancing, where an amount of charge of 10944 C is charged.

It can be seen in Fig. 4B (top graph), that the fourth cell reaches near full SoC first, particularly the voltage measured across the fourth cell 414 is the first to exceed the first characteristic voltage value of 3,4 V. Subsequently, it can be seen in Fig. 4B (bottom graph) the Coulomb counting for the fourth cell as is seen in the Coulomb curve 424 starts from zero. After some time the first cell reaches near full SoC second, particularly the voltage measured across the first cell 411 is the second to exceed the first characteristic voltage value of 3,4 V. Subsequently, the Coulomb counting for the first cell as is seen in the Coulomb curve 421 starts from zero. In this example, it can be seen that although the voltage across the first cell 411 is the highest in the majority of the time, this voltage difference is not a good criteria to decide on balancing. Typical top balancing would remove charge only from the first cell because the cell has the highest terminal voltage. This would increase the imbalance. Furthermore, it can be seen that voltages measured across the second cell 412 and across the third cell 413 have changed but have not exceeded the first characteristic voltage value of 3,4 V. Therefore, the Coulomb counting for the second cell as is seen in the Coulomb curve 422 and the Coulomb counting for the third cell as is seen in the Coulomb curve 423 do not start.

After it is determined that a predetermined charging criteria is fulfilled, in this case the measured voltage across each of the cells has changed, the charging and the Coulomb counting is stopped. It is determined that the battery is not balanced, which may be based on the voltage differences among the cells at the end of charge and/or on the number of Coulombs on the plurality of Coulomb counters.

At the end of charge, the measured voltage across each cell is the following: The voltage across the first cell 411 is around 3,495 V, the voltage across the second cell 412 is around 3,365 V, the voltage across the third cell 413 is around 3,37 V, and the voltage across the fourth cell 414 is around 3,6 V. At the end of charge, the number of Coulombs counted on the respective Coulomb counter for each cell is the following: The number of Coulombs supplied to or stored in the first cell 421 is around 165 C, the number of Coulombs supplied to or stored in the second cell 422 is 0 C, the number of Coulombs supplied to or stored in the third cell 423 is 0 C, and the number of Coulombs supplied to or stored in the fourth cell 424 is around 354 C.

In this example, the charge imbalance is determined based on the counted number of Coulombs. Based on the charge imbalance, the balancing is performed by transferring charge away from the first and fourth cells (i.e., discharging said cells). Particularly, an amount of charge of 165 C is discharged from the first cell and an amount of charge of 354 C is discharged from the fourth cell. Therefore, the resulting initial charge for each cell is the following: The initial charge for the first cell is 25000 - 165 C = 24835 C, the initial charge for the second cell is 25000 C, initial charge for the third cell is 25000 C, and initial charge for the fourth cell is 25000 - 354 C = 24646 C.

Fig. 4C shows a second iteration (resp. a first repetition) of charging and balancing, where an amount of charge of 11301 C is charged. It can be seen in Fig. 4C (top graph), that the first cell, the second cell and the fourth cell reach near full SoC almost simultaneously. Particularly the voltage measured across the first cell 431, the voltage measured across the second cell 432, and the voltage measured across the fourth cell 434 exceed the first characteristic voltage value of 3,4 V almost simultaneously. Subsequently, it can be seen in Fig. 4C (bottom graph) the Coulomb counting for the first cell as is seen in the Coulomb curve 441, the Coulomb counting for the second cell as is seen in the Coulomb curve 442, and the Coulomb counting for the fourth cell as is seen in the Coulomb curve 444 start almost simultaneously from zero. After some time the third cell reaches near full SoC, particularly the voltage measured across the third cell 433 exceeds the first characteristic voltage value of 3,4 V. Subsequently, the Coulomb counting for the third cell as is seen in the Coulomb curve 443 starts from zero.

After it is determined that a predetermined charging criteria is fulfilled, in this case the measured voltage of the last cell (i.e., third cell 433) exceeded the first characteristic voltage value of 3,4 V and the number of Coulombs on the respective Coulomb counter for the third cell changed, particularly from 0 to 5 C in the last counting step, the charging and the Coulomb counting is stopped. It is determined that the battery is almost balanced, which may be based on the voltage differences among the cells at the end of charge and/or on the number of Coulombs on the plurality of Coulomb counters.

At the end of charge, the measured voltage across each cell is the following: The voltage across the first cell 431 is around 3,6 V, the voltage across the second cell 432 is around 3,59 V, the voltage across the third cell 433 is around 3,475 V, and the voltage across the fourth cell 434 is around 3,6 V. At the end of charge, the number of Coulombs counted on the respective Coulomb counter for each cell is the following: The number of Coulombs supplied to or stored in the first cell 441 is around 241 C, the number of Coulombs supplied to or stored in the second cell 442 is 191 C, the number of Coulombs supplied to or stored in the third cell 443 is 5 C, and the number of Coulombs supplied to or stored in the fourth cell 444 is around 231 C.

In this example, the charge imbalance is determined based on the counted number of Coulombs. Based on the charge imbalance, balancing is performed a second time by transferring charge away from the first, second and fourth cells (i.e., discharging said cells). Particularly, an amount of charge of 241 - 5 C = 236 C is discharged from the first cell, an amount of charge of 191 - 5 C = 186 C is discharged from the second cell, and an amount of charge of 231 - 5 C 226 C is discharged from the fourth cell. No charge is transferred to or away from the third cell. Therefore, for a next iteration (resp. a next repetition) of charging, the resulting initial charge for each cell is the following: The initial charge for the first cell is 25000 - 236 C = 24835 C, the initial charge for the second cell is 25000 C, initial charge for the third cell is 25000 C, and initial charge for the fourth cell is 25000 - 354 C = 24646 C.

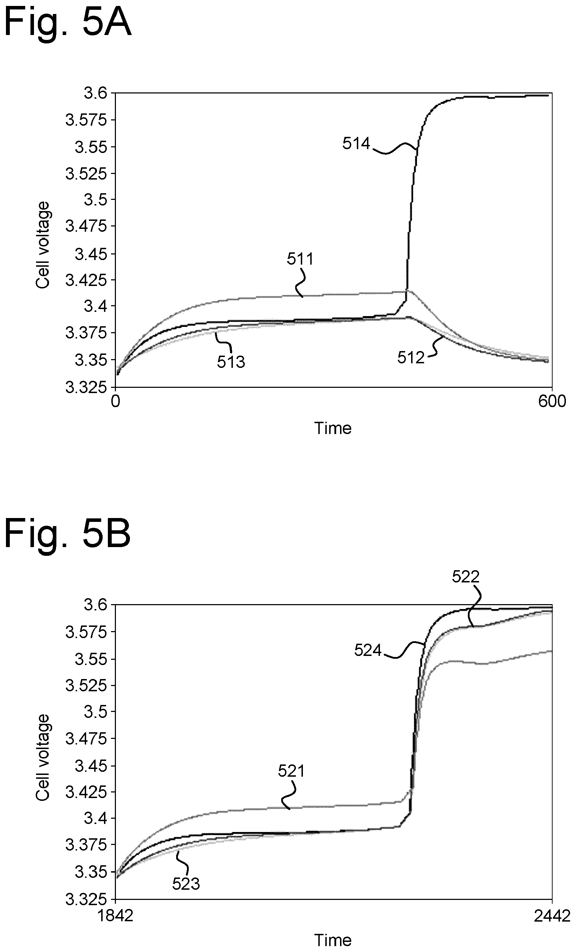

Embodiments of the method according to the present invention will be described with reference to Figs. 5A and 5B. Fig. 5A shows graphical drawings of an EMF curve of each cell and their respective Coulomb count curve as function of time. In this experiment, there are four cells comprised in a battery with the following cell capacities: The first cell is an average cell with high internal resistance, the second cell has a highest DoD (average + 500 C), the third cell is an average cell, and the fourth cell has a low DoD at start of charging (average - 500C). In this experiment, the charge current is variable, such as in a CC/CV charger. The initial imbalance is 1000 C or 2,8% of the nominal capacity.

It can be seen in Fig. 5A, that the fourth cell reaches near full SoC first, particularly the voltage measured across the fourth cell 514 is the first to exceed the first characteristic voltage value of 3,45 V. Thus, the Coulomb counting for the fourth cell starts from zero. In this example, it can be seen that although the voltage across the first cell 511 is the highest in the majority of the time, this voltage difference is not a good criteria to decide on balancing. Typical top balancing would remove charge only from the first cell because the cell has the highest terminal voltage. This would increase the imbalance. Furthermore, it can be seen that voltages measured across the first, cell 511, across the second cell 512 and across the third cell 513 have changed but have not exceeded the first characteristic voltage value of 3,45 V. Instead, said voltages have decreased after the voltage measured across the fourth cell 514 exceeds the first characteristic voltage value of 3,45 V. Therefore, the Coulomb counting for the first, second and third cells does not start.

The charging ends due to a charge current descending below a predetermined current threshold of C/20 or 2.5% of the maximum allowed current of 2C or 20A when charging a 10Ah battery. As can be seen in Table 1 below, only the fourth cell's Coulomb counter has accumulated charge of 366 C in the first iteration of charging.

**Table 1 -A summary of values of the Coulomb counters (in Coulombs) after each iteration.**

| Cell | Iteration 1 | Iteration 2 | Iteration 3 | Iteration 4 | Iteration 5 |
|---|---|---|---|---|---|
| First | 0 C | 0 C | 267 C | 282 C | 0 C |
| Second | 0 C | 0 C | 0 C | 188 C | 38 C |
| Third | 0 C | 0 C | 0 C | 0 C | 18 C |
| Fourth | 366 C | 366 C | 358 C | 357 C | 60 C |

It is concluded that several iterations (resp. repetitions) are needed to balance this battery. After each iteration (resp. repetition) the battery is partially discharged, and the charge in the Coulomb counters is removed on a cell per cell basis, the equivalent of discharge balancing only. Thus, it is concluded that the charge imbalance is reduced.

Fig. 5B shows graphical drawings of an EMF curve of each cell and their respective Coulomb count curve as function of time in the fifth iteration (resp. fourth repetition). It can be seen that all four cells reach near full SOC almost simultaneously. Particularly the voltage measured across the first cell 521, the voltage measured across the second cell 522, the voltage measured across the third cell 523, and the voltage measured across the fourth cell 524 exceed the first characteristic voltage value of 3,45 V almost simultaneously.

The charging ends due to a charge current descending below the predetermined current threshold of C/20. As can be seen in Table 1, the accumulated charge on the Coulomb counters of the cells is smaller compared to the previous iterations. Moreover, the differences in the accumulated charges among the cells is smaller compared to the differences in previous iterations. For example, the accumulated charge of the fourth counter in Iteration 5 is less than a threshold of around 16 % the accumulated charge of the fourth counter in Iteration 1.

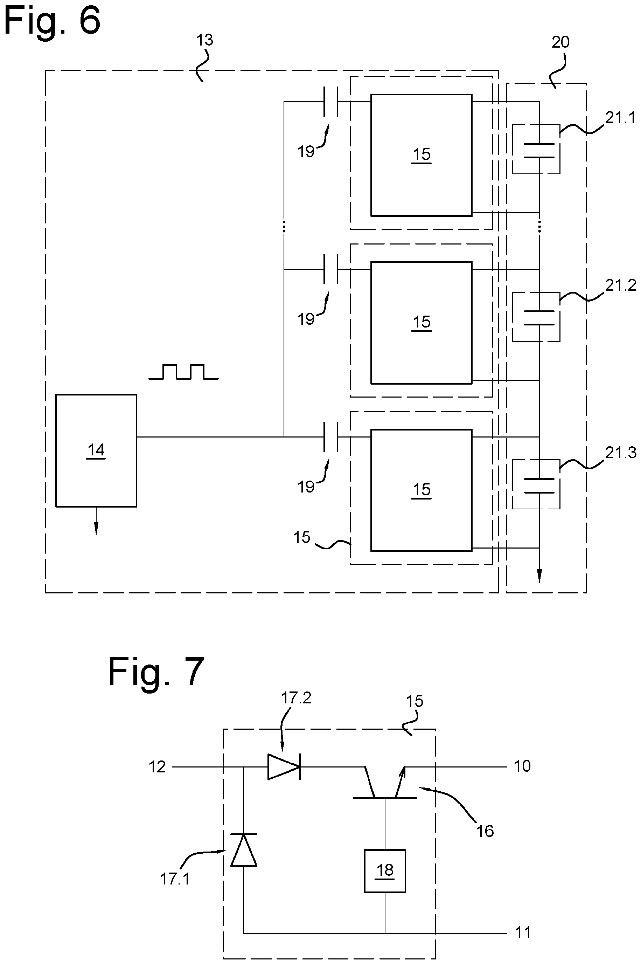

Embodiments of a system according to the present invention will be described with reference to Figs. 6-9. These embodiments can be realized in many different forms and should not be construed as being limited to the aspects described with reference to Figs. 6-9.

Fig. 6 shows a schematic drawing of a system 13 comprising an AC signal generator and a plurality of balancing units 15. The AC signal generator 14 is provided for charging or discharging one or more of the plurality of cells 21.1-21.3 comprised in a battery 20. Furthermore, each balancing unit 15 is assigned to one of the cells 21.1-21.3. For optimal performance, each cell is assigned a balancing unit 15.

Each cell 21.1-21.3 is provided with a first terminal, which is its positive terminal, and a second terminal which is its negative terminal. The cells are connected in series such that a positive terminal of a first cell 21.1 is coupled to a negative terminal of a second cell 21.2, and so on. The negative terminal of the very first cell 21.1 in the series connection, and the positive terminal of the very last cell 21.3 in the series connection may be accessible from outside, for example through terminals of the battery 20.

A balancing unit 15 according to embodiments of the present invention is schematically illustrated in an enlarged format in Fig. 7. It has a first input terminal 11, a first output terminal 10 and a second input terminal. The positive and negative terminals of a cell are respectively connected to the first input and output terminals 10, 11 of the balancing unit 15. The balancing unit 15 may be adapted for measuring an instantaneous electrical parameter of the associated cell 21.1-21.3, e.g. the voltage across the positive and negative terminals of said cell. In order to obtain this, the balancing unit 15 may be provided with suitable measurement circuitry. This measurement circuitry may be for example an analog input of an analog to digital converter (not illustrated) of a microcontroller 18 comprised in the balancing unit 15. From the measured voltage, a charge value can be calculated as q=C^{∗}V. Alternatively, the instantaneous electrical parameter to be measured can be a current. From the measured current, a charge value can be calculated as an integral of the current overtime.

Fig. 7 shows a schematic drawing of a balancing unit of Fig. 6. In Fig. 7, the balancing unit 15 further comprises a second input terminal 12 for receiving an input signal. The input signal is received from the AC signal generator 14. This second input terminal 12 is electrically connected, over a first switch switching means 17.1 and a second switch switching means 17.2, to the positive and negative terminals of a respective cell, respectively, or to the first input terminal 11 and first output terminal 10 of the balancing unit 15. The balancing unit 15 may be adapted for actuating at least one of the first and second switching means in function of the voltage level at the second input terminal. This actuation of the switching means may be controlled by the microcontroller 18.

The switching means can be implemented by any suitable implementation. Examples of switches can be TRIACs or transistors such as bipolar transistors, MOSFETs. The switching means may function as a rectifier to determine the direction of the current through the respective cell depending on the requirement of charging, discharging or leaving the energy storage device unamended. In embodiments, the switching means can be implemented by diodes 17.1, 17.2, as illustrated in Fig. 7. A further switching means, which can be implemented by any suitable device, illustrated by means of a transistor 16, may be provided in order to change the direction of the current through the diodes 17.1, 17.2 in function of the instruction to charge, discharge or leave the cell unamended, and in function of the polarity of the signal at the second input terminal 12 of the balancing unit 15.

All balancing units 15 of the system 13 for balancing are coupled to the AC generator 14. This AC signal generator 14 can be a block wave generator, a sinusoidal signal source, a saw tooth generator, or any other type of AC signal generator. It may be advantageous if the AC signal generator 14 is a high frequency signal generator, as this reduces component size. A sinusoidal signal generator is more efficient, has low peak currents hence low heat generation, and does not substantially present any switching losses. However, a block wave generator is easier to implement than a sinusoidal signal generator. The AC signal generator 14 can be powered from an external source (not illustrated), e.g. a charger, or from the battery 20 comprising a plurality of cells 21.1-21.3. The AC signal generator 14 can be controlled by a main controller (not illustrated).

Fig. 6 shows the balancing units 15 coupled to the AC signal generator by means of a capacitor 19. The capacitive coupling provided by the capacitors 19 is used to block common mode voltages. This may be required because the energy storage devices 12 are at different and varying potential levels. Furthermore, the AC signal generator 14 and the battery (e.g., the negative terminal of the last cell 21.3 in the series connection) are connected to a ground, the ground forming a return path.

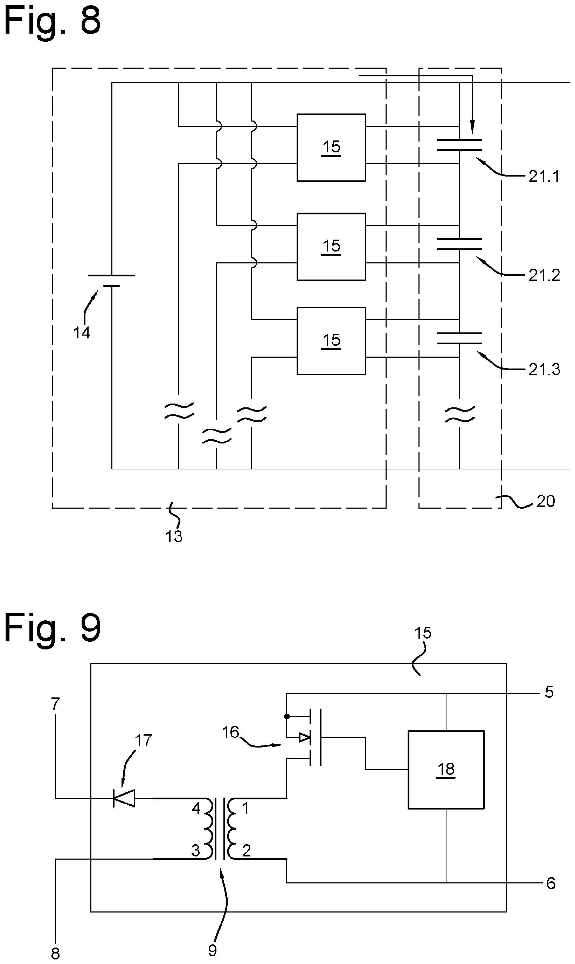

Fig. 8 shows a schematic drawing of a system 13 comprising an DC signal generator 14 and a plurality of balancing units 15, and Fig. 9 shows a schematic drawing of the balancing unit 15 of Fig. 8. A system 13 for balancing plurality of cells 21.1-21.3 connected in series in a battery 20 is shown. The battery 20 may have two connections to the outside, namely a positive connection and a negative connection connected to the positive and negative terminal of the DC signal generator 14. The negative connection may be connected to ground (not illustrated). Via the positive and negative connections flows an electric current with which the battery is charged from the outside or discharged to the outside, as shown in Fig. 8. The system 13 comprises balancing units 15 (for e.g., up-voltage converters), wherein each cell is associated with such a balancing unit 15.

In Fig. 8, the balancing units 15 each has a first and second input terminal 5, 6 and two output terminals 7, 8. The first input terminal 5 is electrically connected to a positive terminal of the respective cell and the second input terminal 6 is electrically connected to the negative terminal of the respective cell. The first output terminal 7 lying at a higher potential is connected to the positive connection of the battery or DC signal generator 14 and the second output terminal 8 lying at a lower potential is connected to the ground or to the negative connection of the battery or DC signal generator 14. The balancing units 15 may thus be connected on the output side parallel to the battery 20.

The balancing units 15 each may have a transformer 9 which divides the balancing units 15 into a primary part with the inputs 5, 8 and a secondary part with the outputs 7, 8. The transformer 9 may have a gear ratio of one. In the example shown in Fig. 9, the transformer 9 has a primary winding 1, 2 (in the primary part) and secondary winding 3, 4 (in the secondary part) with different polarity, so that each primary and secondary side opposite high and low voltage levels.

The primary part of the balancing units 15 is formed by a series connection of the primary winding and a switching means 16, which is a circuit breaker, for example, a bipolar or field effect power transistor (e.g. MOSFET). The secondary part is connected in series the secondary winding and another switching means 17 is formed, which transmits current to the positive connection of the battery or the DC signal generator. The balancing unit 15 also has a microcontroller 18, which supplies the switching signals for the switching means 16. The microcontroller 18 is connected to the input terminals 5 and 6 in order to be able to measure the voltage of the respective cell, as shown in Fig. 9.

The balancing units 15 function as follows: When the voltage of a cell 2 is to be reduced, the microcontroller 18 controls the switching means 16 to be closed. When the switch is closed, current flows in the primary part of the balancing unit 15, so that energy is stored in the transformer 11. When the switch is opened, the stored energy is discharged to the secondary part, wherein the diode 17 is conductive and at the output terminals 7, 8 set a voltage which is greater than the voltage of the battery. Thus, the energy taken from the individual cell - apart from the relatively small losses of the balancing circuit - is fed back into the battery 20 after voltage boosting. Thus, the balancing units 15 may form flyback converters.

As can be understood, the embodiments described with reference to Figs. 6-9 can be construed as example embodiments of a system 13 comprising a plurality of balancing units 15 each connected to a respective cell of the plurality of cells 21.1-21.3; an electric current generator 14 (AC or DC signal generator) configured to provide an electric current (AC or DC) to or away from the plurality of balancing units 15 for balancing the charge/discharge over the plurality of cells 21.1-21.3. Each of the plurality of balancing units 15 comprises at least one switching means (e.g., transistor 16 or controllable switches 17.1, 17.2) configured to connect or disconnect an input terminal (e.g., first input terminal 5 connected to a positive terminal of the battery 20, second input terminal 6 connected to a negative terminal of the battery 20, or second input terminal 12 connected to an AC signal generator 14) to or from an output terminal (e.g., first output terminal 7 connected to a positive terminal of the battery 20 or DC signal generator 14, second output terminal 8 connected to a ground or a negative terminal of the battery 20 or DC signal generator 14, or second input terminal 12 connected to the AC signal generator 14) of the respective balancing unit 15.

The balancing units 15, or thus the system 13 for balancing, functions as follows. Each balancing unit 15 in first instance controls, by means of the microcontroller 18, at least one switching means 16, 17.1, 17.2 to conduct the electric current from the AC/DC signal generator 14 to charge/discharge the battery 20, and during the charging/discharging of the battery 20, determine when a characteristic parameter of a cell of the plurality of cells 21.1-21.3 reaches a first characteristic value associated with a first SoC, and may control a plurality of Coulomb counters to count a number of Coulombs to the respective cell, as described above.

Each balancing unit 15 may determine, by means of the microcontroller 18, when a predetermined charging or discharging criteria is fulfilled. In embodiments, each balancing unit 15 may control, by means of the microcontroller 18, the at least one switching means 16 to stop the AC/DC signal generator 14 from charging or discharging

Furthermore, each balancing unit 15 may determine, by means of the microcontroller 18, a charge or discharge imbalance based on the counted number of Coulombs that is exchanged with or flows through the respective cell of the plurality of cells 21.1-21.3, as described above.

Each balancing unit 15 controls, by means of the microcontroller 18, at least one of the switching means 16, 17.1, 17.2 to transfer charge to or away from at least one cell of the plurality of cells 21.1-21.3 based on the determined charge or discharge imbalance to reduce the charge imbalance, as described above. At least one of the switching means 16, 17.1, 17.2 may be controlled during the transfer of charge to conduct the AC/DC signal to or away from the AC signal generator 14 and/or to or away from at least one other cell of the plurality of cells 21.2-21.3.

**List of reference signs**

| | |
|---|---|
| 1, 2: | Primary coil of transformer |
| 3, 4: | Secondary coil of transformer |
| 5, 6, 11, 12: | Input terminals of balancing unit |
| 7, 8, 10: | Output terminals of balancing unit |
| 9: | Transformer |
| 13: | System |
| 14: | Electric current generator |
| 15: | Balancing unit |
| 16, 17, 17.1, 17.2: | Switching means |
| 18: | Microcontroller |
| 19: | Capacitor |
| 20: | Battery |
| 21.1-21.3: | Battery cells |
| 111, 121: | Determining near full SoC/DoD |
| 112, 122: | Counting a number of Coulombs |
| 114, 124: | Determining when a predetermined criteria is fulfilled |
| 116, 126: | Determining a charge/discharge imbalance |
| 118, 128: | Transferring charge |
| 211-215, 221-225, 310-313, 410-414, 431-434, 511-514, 521-524: | EMF curve |
| 320-323, 421-424, 441-444: | Coulomb curve |

## Claims

1. A method for balancing charge over a plurality of cells connected in series in a battery, the method comprising the steps of:
a) while charging or discharging the battery:
i) determining (111; 121) when a characteristic parameter of a cell of the plurality of cells reaches a first characteristic value associated with a first state of charge;
ii) upon determining that the characteristic parameter of the cell reaches the first state of charge, counting (112; 122) the number of Coulombs exchanged with the cell by means of a respective Coulomb counter of a plurality of Coulomb counters connected to the plurality of cells; and
iii) repeating acts i)-ii) until a predetermined charging or discharging criteria is fulfilled;
b) determining (116; 126) a charge imbalance based on the counted number of Coulombs for each of the plurality of cells; and
c) transferring (118; 128) charge to or away from at least one first cell of the plurality of cells based on the determined charge imbalance to reduce the charge imbalance.

2. The method according to any one of the preceding claims, wherein the first state of charge is near the full state of charge, preferably the first state of charge or discharge is around 98 %.

3. The method according to any one of the preceding claims, wherein the characteristic parameter is a voltage, and wherein determining (111;121) when the cell of the plurality of cells reaches the first characteristic parameter value associated with the first state of charge comprises:
(1) measuring the voltage across each of the plurality of cells; and
(2) determining when any one of the measured voltages passes the first characteristic voltage value.

4. The method according to any one of the preceding claims, wherein the predetermined charging or discharging criteria is fulfilled when the characteristic parameter of any cell of the plurality of cells reaches a second characteristic value associated with a second state of charge.

5. The method according to claim 4, wherein the second state of charge is near the full state of charge, preferably the second state of charge is around 100 %.

6. The method according to any one of the preceding claims, wherein the predetermined charging or discharging criteria is based on at least one of the group consisting of: a predetermined current threshold and a predetermined voltage threshold.

7. The method according to claim 6, wherein the predetermined current threshold is around 5% or less, around 4% or less, around 3% or less of a maximum allowed current.

8. The method according to claim 6 or claim 7, wherein the predetermined voltage threshold is around 85% or more, around 90% or more or around 95% or more of a maximum/minimum voltage at the full state of charge.

9. The method according to any one of the preceding claims, further comprising the steps of:
d) determining (114; 124) when the predetermined charging or discharging criteria is fulfilled; and
e) upon determining that the predetermined criteria is fulfilled, stop charging or discharging,
wherein steps b)-c) are performed after the predetermined charging or discharging criteria is fulfilled.

10. The method according to any one of the preceding claims, wherein steps b)-c) are performed before and/or after the predetermined charging or discharging criteria is fulfilled.

11. The method according to any one of the preceding claims, wherein determining (116; 126) the charge imbalance comprises determining a balancing time, a balancing current and a balancing direction.

12. The method according to any one of the preceding claims, wherein transferring (118; 128) charge comprises providing an electric current to or away from an electric current generator and/or to or away from at least one second cell of the plurality of cells.

13. The method according to any one of the preceding claims, wherein transferring (118; 128) charge is performed until the plurality of Coulomb counters hold a same number of Coulombs.

14. A system for balancing charge over a plurality of cells (21.1-21.3) connected in series in a battery (20), the system (13) comprising:
a plurality of balancing units (15) each connected to a respective cell of the plurality of cells (21.1-21.3); and
an electric current generator (14) for providing an electric current to or away from the plurality of balancing units (15) for balancing the charge/discharge over the plurality of cells (21.1-21.3),
wherein each of the plurality of balancing units (15) comprises at least one switching means (16) configured to connect or disconnect an input terminal (5, 6; 11, 12) to or from an output terminal (7, 8; 10) of the respective balancing unit (15),
wherein each of the plurality of balancing units (15) comprises a microcontroller (18), the microcontroller (18) configured to:
d) control the at least one switching means (16) to conduct the electric current from the electric current generator (14) to charge or discharge the battery (20), and while charging or discharging the battery (20):
i) determine when a characteristic parameter of a cell of the plurality of cells (21.1-21.3) reaches a characteristic value associated with a first state of charge;
ii) upon determining that the characteristic parameter of the cell reaches the first state of charge, the number of Coulombs exchanged with the cell by means of a respective Coulomb counter of a plurality of Coulomb counters connected to the plurality of cells; and
iii) repeating acts i)-ii) until a predetermined charging or discharging criteria is fulfilled
e) determine a charge imbalance based on the counted number of Coulombs for each of the plurality of cells (21.1-21.3); and
f) control the at least one switching means (16) to transfer charge to or away from at least one first cell of the plurality of cells (21.1-21.3) based on the determined charge imbalance to reduce the charge imbalance.

15. The system according to claim 14, wherein the battery (20) is an Alkali-ion battery, preferably, a Lithium-ion battery, Nickel based battery, a Sodium-ion battery, a Potassium-ion battery or any other Alkali-ion battery wherein the voltage across the cell indicates an approximate state of charge/discharge.
